# EUROPEAN PATENT SPECIFICATION

(11) **EP 2 147 148 B1**
(45) Date of publication and mention of the grant of the patent: **07.03.2012**
(21) Application number: 08779277.6
(22) Date of filing: 25.04.2008
(51) Int. Cl.: D21C 9/06, B01D 33/067, B01D 33/09, B01D 35/16

(54) **APPARATUS AND METHOD FOR WASHING PULP IN A ROTATABLE DRUM**
VORRICHTUNG UND VERFAHREN ZUR WASCHUNG EINES ZELLSTOFFS IN EINER ROTIERENDEN TROMMEL
APPAREIL ET PROCÉDÉ DE BLANCHIMENT DE PÂTE DANS UN TAMBOUR ROTATIF

(30) Priority: 15.05.2007 SE 0701212
(43) Date of publication of application: 27.01.2010
(73) Proprietor: Metso Paper, Inc., 00101 Helsinki (FI)
(72) Inventor: LUNDBERG, Jörgen, S-85 643 Sundsvall (SE)
(74) Representative: Löfgren, Håkan Bengt Alpo
(86) International application number: PCT/SE2008/050476
(87) International publication number: WO 2008/140396

(56) References cited:
- US-A- 2 449 902
- US-A- 3 258 125
- US-A- 4 769 986

## Description

### Technical Field

The present invention relates to an apparatus and a method for washing pulp in a washing apparatus comprising a rotatable drum provided with a number of outer compartments, which are defined by compartment walls extending along the longitudinal extension of the drum and distributed around the circumference of the drum, where the pulp is formed in the compartments of the drum in a formation zone, where the pulp placed in the compartments is washed in at least one washing zone, and where the washed pulp situated in the compartments is discharged from the compartments in a discharge zone. The drum comprises a number of filtrate channels for transporting filtrate from the compartments, the filtrate channels extending along the longitudinal extension of the drum and being provided inwardly of the compartments, and comprises a surface permeable to fluid provided between the filtrate channels and the compartments, via which surface the filtrate from the compartments reaches the filtrate channels, each filtrate channel comprising at least one outlet for discharging filtrate from the filtrate channel. The present invention especially relates to the washing of cellulose-containing pulp.

### Background of the Invention

All fibre lines comprise some type of washing equipment for separating the liquor of the cooking from the pulp. Later on in the process, washing equipment is provided to separate bleaching liquors after the bleaching steps. There are a number of different types of washing equipment operating according to different principles.

A well-known type of washing apparatus is the drum washer, where the pulp is dewatered on a rotating filter drum after the addition of washing liquid, which displaces the liquor remaining on the pulp web after the preceding process step, for example a cooking step or bleaching step. The static pressure causes the contaminated liquid, called filtrate, to pass through a surface permeable to liquid, such as a perforated plate, provided on the drum. A further development of the original drum washer is the pressurized displacement washer, where the filtrate, under overpressure, is forced to pass through the perforated plate. The increase in pressure difference results in an improved dewatering of the pulp. In the pressurized displacement washer, the increased pressure difference may result in that the pulp web gets stuck more firmly against the plate of the drum, and sometimes, the pulp web must be removed by means of some kind of aid or means. The pulp web can, for example, be released by way of liquid or air pressure.

According to a known design of the pressurized displacement washer, the drum is provided with compartments in which the pulp is placed in long and narrow rectangles against the plate in the axial direction of the drum. The subdivision into compartments of the drum ensures that the pulp cake does not break up and moves, but instead maintains the form produced upon application of the pulp. The compartments are made up of compartment walls provided axially along the entire length of the drum. The perforated plate, on which the pulp is deposited, is located at a distance from the axle of the drum so that filtrate channels are formed in the space between the drum and the perforated plate. Along the circumference of the drum there are usually as many filtrate channels as pulp compartments. In a drum washer, a plurality of different washing steps can be performed, with separate addition of washing liquid to the different steps, and also return of filtrate from one step for use as washing liquid in another step.

In order to maintain maximum washing efficiency, it is desirable that washing liquid intended for a specific washing step is not transferred to a subsequent washing step, or other subsequent process step. A pressure difference between the steps provides for that the supplied washing liquid tends towards the lower pressure. In order to enable the separation of different washing steps, which are performed in a washing zone of the drum, forming steps, which are performed in a forming zone of the drum, and discharge steps (a zone for enhanced pulp concentration constitutes a first part of the discharge zone), which are performed in a discharge zone of the drum, the respective zones are sealed by longitudinal seals. These longitudinal seals are provided between the rotating drum and the surrounding casing. The filtrate, i.e. the contaminated washing liquid, from the respective zones is separated by seals in a peripheral end valve provided at one or both of the ends of the drum.

WO 2006/130109 A1 discloses a device for seal adjustment in a pressurized displacement washer having several compartments as disclosed above, where the longitudinal seals, which extend in the axial direction of the drum and divide the drum in zones, are adjusted.

WO 2006/130089 describes a pressurized displacement washer as disclosed above, which, by means of its structure, no longer requires a big and heavy framework, whereby its dead weight is reduced.

WO 2006/130097 A1 also discloses an apparatus for washing and dewatering pulp comprising a rotatable drum having several compartments as described above, where each of the longitudinal seals, which extend in the axial direction of the drum and divide the drum in zones, is articulated connected with positioning cylinders to make possible oblique positioning of the seal.

WO 97/10380 describes an apparatus for washing pulp, comprising a stationary casing and a rotatable drum provided inside the casing, which drum is provided with a perforated surface and longitudinal filtrate channels, where the perforated surface comprises a number of replaceable elements.

However, several drum washers, pressurized washers as well as non-pressurized drum washers, have problems with regard to the rewetting of the pulp by filtrate, i.e. that the filtrate, which has been removed from the pulp through the perforated plate after a washing step, flows back through the perforated plate and dilutes and contaminates the washed pulp. The result of this rewetting with filtrate is that the washing efficiency is impaired since filtrate previously pressed out contaminates the pulp.

US-A-2 449 902 presents a solution to this problem. All the longitudinal filtrate channels are provided with several drain pipes which are distributed along the filtrate channel and extend in a radial direction from the longitudinal side of the filtrate channel inwardly towards the rotation axis of the drum. Via these drain pipes, a fluid flow is generated, in the form of a gas flow, through the filtrate channel in order to capture remaining filtrate for discharging fluid, i.e. the gas, with the captured filtrate from the filtrate channel via the drain pipes to a filter device provided on the axle of the drum and at one of the ends of the drum. The aim is to reduce the rewetting of the washed pulp. However, a drawback of the solution according to US 2 449 902 A, which the inventor of the present invention has found, is that fluid and filtrate which remain in the long drain pipes impair the next discharge of the filtrate channels.

### The Object of the Invention

The object of the present invention is thus to prevent that drum-washed pulp is rewetted with filtrate.

### Summary of the Invention

The above-mentioned object of the present invention is attained by providing an apparatus as defined in claim 1, and by providing a method as defined in claim 13.

The inventor has found that a cause of the rewetting is that all of the filtrate which has been removed from the pulp and forced into the filtrate channels has not been discharged from the channels, but a certain amount of filtrate still remains in the filtrate channels. The remaining filtrate in the filtrate channels involves drawbacks between two different washing steps and also upon discharge of the pulp from the compartments in the discharge zone, especially since the compartments in the discharge zone are located substantially below the filtrate channels.

Additionally, in some drum washers, the filtrate channels are pressurized when the associated compartment is located in the discharge zone in order to produce a pressure on the pulp in the compartment so that the pulp is released. Here, remaining filtrate in the filtrate channels is especially negative as the overpressure produced in the filtrate channels forces the filtrate back into the compartments to an even greater extent.

By the present invention, an efficient discharge of filtrate remaining in the filtrate channel is attained, which filtrate has been brought into the filtrate channel via the surface permeable to fluid and is left after the initial discharge of filtrate from the filtrate channel after a washing step. Hereby, the amount of filtrate remaining in the filtrate channel, which is left after the initial discharge of the filtrate channel, is minimized, whereby the rewetting of the pulp, which is situated in the compartment, with filtrate remaining in the filtrate channel in the subsequent washing zone, or at the discharge in the discharge zone, is minimized. The result of this is a more efficient washing of the pulp in relation to prior art.

By the present invention, the discharge of fluid and captured filtrate from the filtrate channel becomes more efficient, since there is provided a more even flow of fluid and captured filtrate through the filtrate channel at the "blow-out" as a result of the fact that the discharge of the fluid and captured filtrate is effected in the axial direction and in direct connection to the open end, equal to the outlet, of the filtrate channel at the end of the drum. Fluid and filtrate are no longer guided through a complicated pipe system having radially extending drain pipes where remaining fluid and filtrate block the next discharge of the filtrate channel.

By the present invention, the complicated pipe system with drain pipes situated inside the drum can be excluded, and the apparatus according to the present invention becomes less complicated in its structure and the manufacture becomes more cost-effective.

In the drain pipes of US 2 449 902 A, a large volume of fluid and filtrate can accumulate after a discharge of a filtrate channel, which consequently prevents and impairs the next discharge of the filtrate channel, since said volume first has to be forced out before the filtrate channel can be blown out. The discharge of the drain pipes is energy consuming and results in that the washing steps do not become adequately distinct since the discharge of the filtrate channel is adversely affected. Since the drain pipes extend in a radial direction from the filtrate channel, which has closed ends, the flow out of the filtrate channel is poorer, turbulence can arise, for example. The solution according to the present invention is also less sensitive to pressure changes, for example a decrease in pressure.

The reliability in operation is also improved by way of the present invention, since there is no risk of any potential blockage in the drain pipes, which extend inside the drum, when these are excluded.

According to an advantageous embodiment of the apparatus according to the present invention, each filtrate channel has an open end at one end of the drum and an open end at the other end of the drum, where at least one of the open ends defines said outlet of the filtrate channel. Hereby, an even more even flow of fluid and captured filtrate through the filtrate channel at the "blow-out", and a more efficient discharge are attained.

According to another advantageous embodiment of the apparatus according to the present invention, the apparatus comprises a covering means for retaining the pulp in the compartment, and the means for controlling the fluid flow is adapted to guide the fluid flow in the filtrate channel when the associated compartment is covered by the covering means. Advantageously, this can be effected by providing the apparatus with a stationary covering means, for example in the form of guide plate which covers those compartments which are passing the covering means. The guide plate can be attached to the casing. Alternatively, the apparatus comprises a control device which controls a movable covering means, the control device being adapted to control the covering means to cover the compartment, in the associated filtrate channel of which the fluid flow is guided. Since the compartment in the discharge zone has an opening which opens downwardly and is situated substantially below the associated filtrate channel, it is especially advantageous that the apparatus comprises the above-mentioned covering means to prevent any pulp from leaving the compartment during the generation and control of the fluid flow in the filtrate channel.

With the phrase "the compartment is associated with a filtrate channel" is meant that the compartment is in fluid communication with the filtrate channel, i.e. that fluid can be transported from the compartment to the filtrate channel, and vice versa, and in shown embodiments, this is effected by a perforated plate. Each filtrate channel can be associated with one or several compartment, where the common situation is that a filtrate channel is associated with one compartment. Alternatively, one compartment can be associated with two or more filtrate channels.

According to a further advantageous embodiment of the apparatus according to the present invention, after the washing of the pulp in the at least one washing zone, which pulp is placed in the compartment, and before the discharge of the washed pulp in the discharge zone, the means for controlling the fluid flow is adapted to guide the fluid flow in the filtrate channel associated with said compartment.

According to another advantageous embodiment of the apparatus according to the present invention, the apparatus comprises a pressurizing means for pressurizing the filtrate channel, which pressurizing means is connectable to the fluid inlet of the filtrate channel, and the outlet of the filtrate channel is provided with a closure means for closing the outlet at said pressurizing, the apparatus being adapted to control the pressurizing means to increase the pressure in the filtrate channel when the associated compartment is positioned in the discharge zone, whereby the increase in pressure pushes the pulp out of the compartment, and where the means for controlling the fluid flow is adapted to guide the fluid flow in the filtrate channel before the apparatus increases the pressure in the same.

When using an overpressure in conventional drum washers to release pulp from the compartment at the discharge in the discharge zone, this overpressure promotes that filtrate remaining in the filtrate channel is forced back through the surface preamble to fluid and back to the pulp, which is not desirable. By performing the innovative generation and control of the fluid flow before the increase in pressure in the filtrate channel, this is avoided, since the amount of filtrate remaining in the filtrate channel has been minimized by the present invention.

Advantageously, the means for generating a fluid flow and the means for controlling the fluid flow are parts of the same unit, and said means can be implemented as a nozzle and/or a valve. The pressurizing means can also be part of said unit, but can advantageously also be in the form of a second separate unit. The apparatus can also comprise several means for controlling a fluid flow, where some can be provided in the filtrate channel. Said unit can be stationary and be connected to the fluid inlet of a passing filtrate channel during the rotation of the drum. Alternatively, each filtrate channel is provided with its own unit fixedly connected at the fluid inlet, which rotates with the drum. The means for controlling a fluid flow can also comprise a control device which controls the means for generating a fluid flow. When the means for generating a fluid flow is in the form of a nozzle, the control device can be adapted to control the size of the nozzle's mouth against the filtrate channel and/or control the supply of fluid flow to the nozzle, such as controlling the flow rate.

According to yet another advantageous embodiment of the apparatus according to the present invention, the apparatus comprises at least two consecutive washing zones which the compartments pass during the rotation of the drum, and the means for controlling the fluid flow is adapted to guide the fluid flow in the filtrate channel after the washing of the pulp, which is situated in the associated compartment, in the first washing zone and before the washing in the second washing zone. Hereby, it is avoided that filtrate is transferred from the first washing zone to the second washing zone because of filtrate from the previous washing zone which remains in the filtrate channel. It is also possible to perform the innovative generation and control of the fluid flow in the filtrate channel within one and the same washing zone.

According to another advantageous embodiment of the apparatus according to the present invention, the apparatus comprises a stationary pressure casing which encloses the drum, and a ring-shaped space is defined by the casing and the drum, where at least one part of the ring-shaped space is adapted to be pressurized to force filtrate from the pulp situated in the compartment to the filtrate channel via the surface permeable to fluid.

According to an advantageous embodiment of the method according to the present invention, each filtrate channel is provided with an open end at one end of the drum and an open end at the other end of the drum, where at least one of the open ends defines said outlet of the filtrate channel. Hereby, an even more even flow of fluid and captured filtrate through the filtrate channel at the "blow-out", and a more efficient discharge are attained.

According to another advantageous embodiment of the method according to the present invention, the pulp is retained in the associated compartment, during the control of the fluid flow in the filtrate channel, by covering the compartment by means of a covering means, whereby pulp is prevented from leaving the compartment during the generation and control of the fluid flow.

According to a further advantageous embodiment of the method according to the present invention, after the washing of the pulp in the at least one washing zone, which pulp is placed in the compartment, and before the discharge of the pulp in the discharge zone, the fluid flow is guided in the filtrate channel associated with the compartment. Advantageously, the method comprises the step of pressurizing the filtrate channel when the associated compartment is located in the discharge zone, whereby the increase in pressure pushes the pulp out of the compartment, and the fluid flow is guided in the filtrate channel before the pressure in the filtrate channel is increased.

According to another advantageous embodiment of the method according to the present invention, the method comprises the steps of washing the pulp in at least two consecutive washing zones, which pulp is situated in the compartments, and the fluid flow is guided in the filtrate channel after the washing of the pulp, which pulp is situated in the associated compartment, in the first washing zone and before the washing in the second washing zone.

The method according to the present invention is especially advantageous for the pressurized displacement washer described in the introductory part of the specification, but also for other types of drum washers.

According to an advantageous embodiment of the present invention, the fluid flow is in the form of a liquid flow. When the liquid flow has washed away the remaining filtrate and the filtrate channel is discharged, only remainders of the pure liquid flow remains, whereby the pulp, if rewetted, is only rewetted by pure liquid. In the case of liquid flow, the means for generating a fluid flow can be a nozzle which is connectable to pipes carrying liquid.

According to another advantageous embodiment of the present invention, the fluid flow is in the form of a gas flow. Hereby, in principle, no liquid remains in the filtrate channel, not in the form of filtrate or pure liquid, and the pulp which is discharged in the discharge zone is subjected to a minimized rewetting and obtains an adequate dry matter content. In the case of gas flow, the means for generating a fluid flow can be a nozzle which is connectable to pipes carrying, for example, pressurized air, or connectable to a generator generating pressurized air.

Further advantageous embodiments of the method and the apparatus according to the present invention emerge from the dependent claims, and detailed description of preferred embodiments of the method and the apparatus, respectively.

### Brief Description of the Drawings

The present invention will now be described, for exemplary purposes, in more detail by way of embodiments and with reference to the enclosed drawings, in which:
- Fig. 1: is a schematic perspective view of a rotatable drum included in an embodiment of the apparatus according to the present invention;
- Fig. 2: is a schematic axial cross-section of an embodiment of the apparatus according to the present invention;
- Figs. 3-5: show a longitudinal section of the rotatable drum, which is included in the apparatus of Fig. 2, through a filtrate channel in different positions during the washing process; and
- Figs. 6-8: show a longitudinal section of a rotatable drum through a filtrate channel, which drum is included in a second embodiment of the apparatus according to the present invention, and illustrate an embodiment of the method for washing according to the present invention.

### Detailed Description of Preferred Embodiments

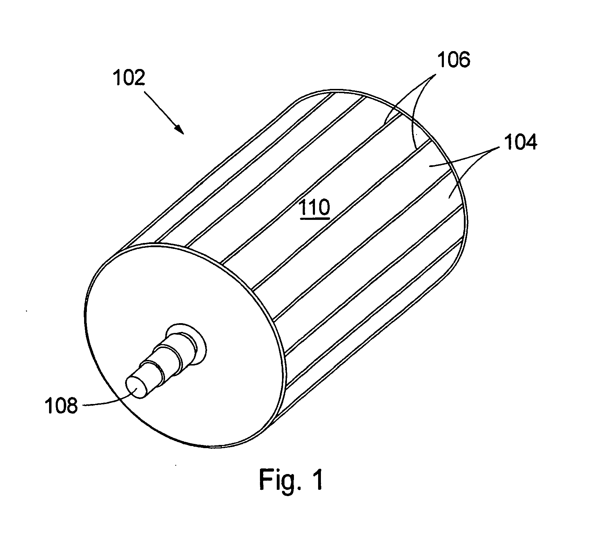

Fig. 1 shows a rotatable drum 102 included in an embodiment of the apparatus according to the present invention. The drum 102 is provided with a number of outer compartments 104 in which the cellulose-containing pulp, which is to be washed, is placed when fed towards the drum 102. The compartments 104 are defined by compartment walls 106 extending along the longitudinal extension 108 of the drum 102 and evenly distributed around the circumference of the drum 102. Each compartment 104 has a bottom made of a surface 110 permeable to fluid, which is in the form of a perforated plate 110.

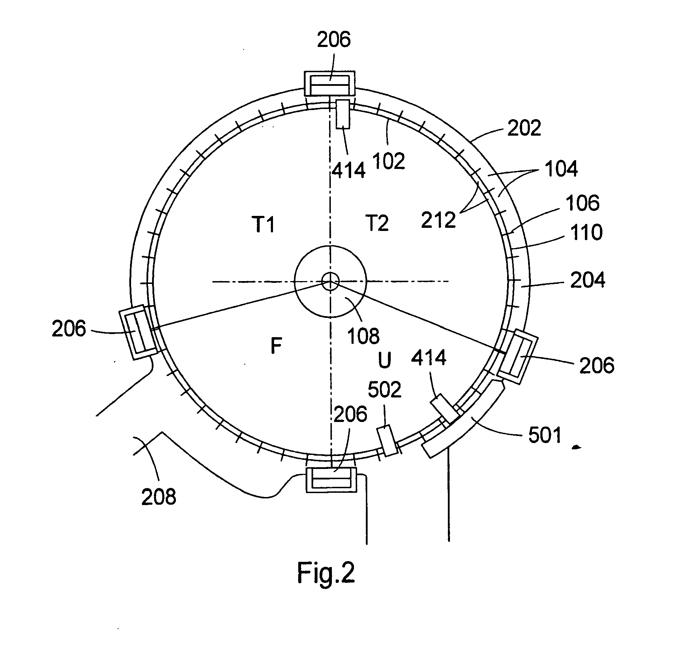

Fig. 2 shows an axial cross-section of the apparatus according to the present invention, provided with the rotatable drum 102 shown in Fig. 1. The apparatus includes a stationary pressure casing 202 which encloses the drum 102, whereby a ring-shaped space 204 is defined by the casing 202 and the drum 102, where at least one part of the ring-shaped space 204 is adapted to be pressurized. The apparatus includes several seals 206 which extend parallelly to the axis 108 of the drum 102 and are situated between the rotatable drum 102 and the casing 202. These longitudinal seals 206 seal between the casing 202 and the compartment walls 106 of the compartments 104, and serve as separating elements between different zones F, T1, T2, U of the apparatus. The seals 206 prevent washing liquid intended for a specific washing step from moving to a subsequent washing step, especially as it normally is a difference in pressure between different washing steps. Here, four longitudinal seals 206 are shown, which separate the ring-shaped space 204 into four zones, more precisely into a formation zone F, to which pulp is fed via a pulp inlet 208 of the apparatus, for forming the pulp in the compartments 104 of the drum 102, a first and a second washing zone T1, T2 for washing the pulp placed and formed in the compartments 104, and a discharge zone U for discharging the washed pulp, which is situated in the compartments 104, from the compartments 104. The apparatus includes a pulp outlet 210 for discharging the pulp from the apparatus, in which pulp outlet 210 there is atmospheric pressure. The drum 102 comprises a number of filtrate channels 212 for transporting filtrate from the compartments 104, which filtrate channels 212 extend parallelly to the axis 108 of the drum 102 and are provided inwardly of the compartments 104. The perforated plate 110 is provided between the filtrate channels 212 and the compartments 104, via which plate 110 the filtrate from the compartments 104 reaches the filtrate channels 212, where each compartment 104 is associated with its own filtrate channel 212.

Further, the apparatus includes two stationary nozzles 414 which are connectable to the fluid inlet of each filtrate channel 212, where the fluid inlet of each filtrate channel 212 passes the nozzles 414 during the rotation of the drum 102. Each nozzle 414 includes means 414 for generating a fluid flow through the filtrate channel 212 and means 414 for controlling the fluid flow to capture filtrate remaining in the filtrate channel 212 and to discharge captured filtrate from the filtrate channel 212 via the outlet thereof. In the embodiments which are disclosed in the detailed description, the fluid flow is in the form of a gas flow. The apparatus includes a stationary covering means 501 in the form of a guide plate 501 adapted to cover the compartments 104 and retain the pulp situated therein, while the compartments 104 are passing the guide plate 501. The apparatus also includes a stationary pressurizing means 502 for pressurizing a passing filtrate channel 212, and a stationary closure means 504 for closing the outlet 402 of the filtrate channel 212 at said pressurizing.

The rotatable drum 102 and the casing are normally made of steel. The longitudinal seals 206 can also be made of metal, but is advantageously made of a polymeric material.

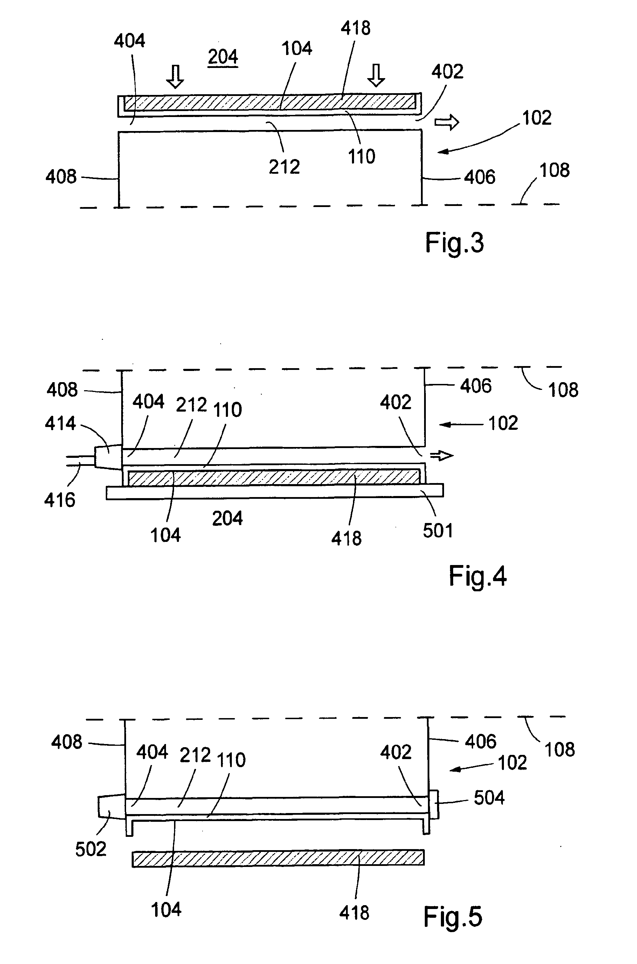

Figs. 3 to 5 show a longitudinal section of the apparatus of Fig. 2 through a filtrate channel in different positions during the washing process.

In Fig. 3, a filtrate channel 212 and the associated compartment 104 with the perforated plate 110 therebetween are shown. The filtrate channel 212 is provided with an outlet 402 for discharging filtrate from the filtrate channel 212 and a fluid inlet 404. The filtrate channel 212 extends along the longitudinal extension of the drum 102 between the fluid inlet 404 and the outlet 402, the discharge outlet 402 being provided at the first end 406 of the drum 102, and the fluid inlet 404 being provided at the second end 408 thereof. Each filtrate channel 212 has an open end at the first end 406 of the drum 102 and an open end at the second end 408 of the drum 102, where the open end at the first end 406 defines said outlet 402 of the filtrate channel 212, and where the open end of the second end 408 defines the fluid inlet 404.

In Fig. 3, the shown compartment 104 is positioned at the end of the washing zone T2 (see Fig. 2), where the washed and formed pulp 418 is situated in the compartment 104, and the overpressure produced in the ring-shaped space 204 forces the filtrate through the pulp 418, which is situated in the compartment 104, via the perforated plate 110 to the filtrate channel 212, where the filtrate then is guided towards the outlet 402 of the filtrate channel 212 and is discharged. However, all filtrate which originates from the washing zone T2 does not leave the filtrate channel 212, but a certain amount remains.

In Fig. 4, the compartment 104 is positioned in the discharge zone U (see Fig. 2) and is positioned substantially below the associated filtrate channel 212. The apparatus includes, as disclosed above, a nozzle 414 connectable to the fluid inlet 404 of the filtrate channel 212. The nozzle 414 is connectable to a gas pipe 416, but can be connectable to any form of unit which generates pressurized air, which supplies the nozzle 414 with pressurized air. As mentioned above, here the means 414 for generating a fluid flow and the means 414 for controlling a fluid flow are part of one and the same nozzle 414, but there can also be several means for controlling the fluid flow, where same means can be provided outside the nozzle 414, e.g. in the filtrate channel. The means 414 for generating a fluid flow is adapted to generate a fluid flow through the filtrate channel 212 from the fluid inlet 404 of the filtrate channel 212 to the outlet 402 thereof. The means 414 for controlling the fluid flow can also be in the form of a control device adapted to control the size of the nozzle's 414 mouth in order to increase and decrease the mouth size. The means for controlling the fluid flow can also be designed in such a way that it is adapted to control other parameters of the means 414 for generating a fluid flow and thereby controlling the gas flow. As mentioned above, the apparatus includes a stationary guide plate 501. Alternatively, the covering means can be pivotally or slidably mounted and be moved towards and away from the compartment. When the compartment 104 is covered by the covering means 501, the nozzle 414 is adapted to control the gas flow in the filtrate channel 212 associated with the compartment 104. The nozzle 414 is adapted to control the gas flow so that filtrate remaining in the filtrate channel 212 is captured and brought along with the gas flow to the outlet 402 where gas and captured filtrate from the filtrate channel 212 are discharged via the outlet 402. Hereby, filtrate remaining in the filtrate channel 212 after the washing in the washing zone T2 is discharged from the filtrate channel 212.

In Fig. 5, the compartment 104 is still positioned in the discharge zone U (see Fig. 2) but the compartment 104 has passed by the covering means 501. The apparatus includes a pressurizing means 502 for pressurizing the filtrate channel 212, where the nozzle 414 and the pressurizing means 502 are connectable to one and the same fluid inlet 404 of the filtrate channel 212. Further, the apparatus includes a closure means 504 for closing the outlet 402 of the filtrate channel 212 at said pressurizing. The apparatus is adapted to increase the pressure in the filtrate channel 212 when the associated compartment 104 is positioned in the discharge zone U, whereby the increase in pressure pushes the pulp 418 out of the compartment 104. Since the pulp 418 can get stuck in the compartment 104 to such an extent that it is not enough with the force of gravity acting on the pulp 418 to release the pulp 418 from the compartment, it is advantageous to apply this increase in pressure. However, the nozzle 414 is adapted to control the gas flow in the filtrate channel 212 before the apparatus increases the pressure in the filtrate channel 212. Hereby, the amount of remaining filtrate in the filtrate channel 212 is minimized, whereby the overpressure produced in the filtrate channel 212 does not run the risk of forcing out filtrate to the pulp 418 during the discharge of the pulp 418 from the compartment 104.

Each longitudinal compartment 104 in Fig. 3-5 can be divided into several sub-compartments by transversal walls so that each longitudinal compartment includes several sub-compartments provided after one another along the longitudinal extension of the drum.

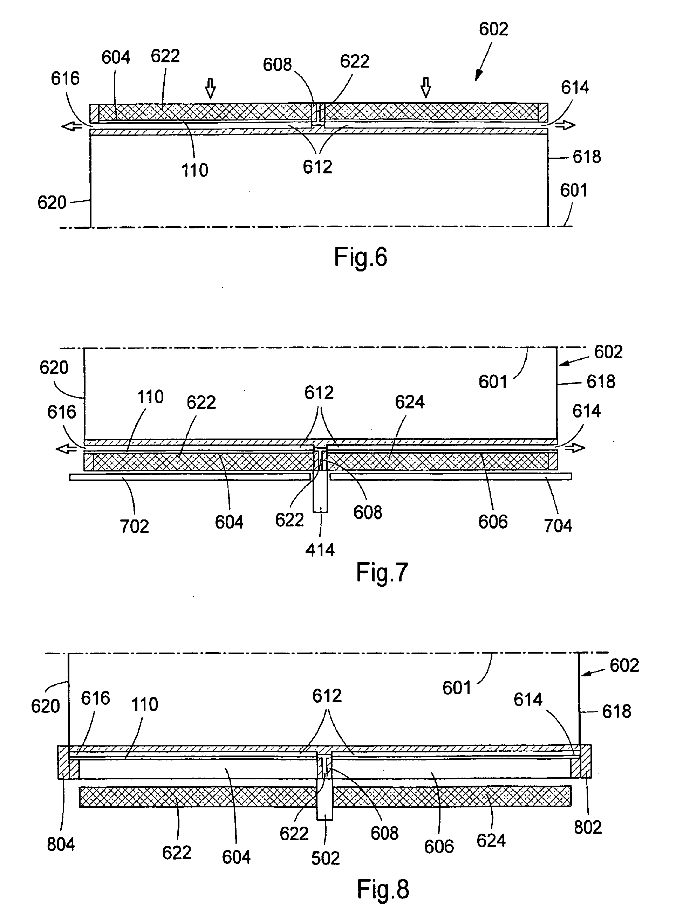

Figs. 6 to 8 show a longitudinal section of a drum 602 through a filtrate channel positioned in different positions during the washing process, which drum is 602 is rotatable around its central axis 601 and is included in a second embodiment of the apparatus according to the present invention. The difference between this drum 602 and the drum of Fig. 3-5 is that the axial longitudinal compartments are divided into a first and a second compartment 604, 606 by a central compartment wall 608 extending around the circumference of the drum, and both of these compartments 604, 606 are associated with one and the same filtrate channel 612. The filtrate channel 612 extends through the central compartment wall 608 via a drilled opening. The fluid inlet 622 of the filtrate channel 612 is provided by a radial hole drilled in the central wall 608, and the fluid inlet 622 of the filtrate channel 612, to which the nozzle 414 and the pressurizing means 502 are connectable, is centrally situated between the first and the second end 618, 620 of the drum. Instead of only one outlet, each filtrate channel 612 is provided with two outlets 614, 616 provided at the first and the second end 618, 620, respectively, of the drum 602. Each filtrate channel 612 has an open end at the first end 618 of the drum 602, and an open end at the second end 620 of the drum 602, where the open end at the first end 618 defines one of the outlets 614 of the filtrate channel 612, and the open end at the second end 620 defines the other outlet 616. The filtrate channel 612 extends along the longitudinal extension of the drum 602 between said fluid inlet 622 and said outlets 614, 616.

Further, in the second embodiment, the apparatus includes two stationary closure means 802, 804 for closing the outlets 614, 616 (see Fig. 8) of the passing filtrate channels 612. Otherwise, the second embodiment includes features corresponding to the features of the apparatus of Figs. 1-5, for which the same reference signs are used in Figs. 6-8 as in Figs. 1-5.

With reference to Fig. 2 and Figs. 6-8, hereinafter an embodiment of the method according to the present invention is disclosed, where each filtrate channel 612 is provided with an open end at the first end 618 of the drum 602, and an open end at the second end 620 of the drum 602, where the open end at the first end 618 defines the first outlet 614 of the filtrate channel 612, and where the open end at the second end 620 defines the second outlet 616. Cellulose-containing pulp is fed to the apparatus via the pulp inlet 208 (see Fig. 2) and is formed in the compartments 604, 606 of the drum 602 in a formation zone F (see Fig. 2). The pulp formed and situated in the compartments 604, 606 is washed in a first washing zone T1 and in a second washing zone T2 (see Fig. 2).

In Fig. 6, the compartments 604, 606 are positioned in the end of the washing zone T2 (see Fig. 2), where the washed and formed pulp 622, 624 is situated in the compartments 604, 606, and the ring-shaped space 204 is pressurized in the second washing zone T2, whereby the overpressure produced in the ring-shaped space 204 forces the filtrate through the pulp, which is situated in the compartments 604, 606, via the perforated plate 110 to the filtrate channel 612 where the filtrate then is guided towards the outlets 614, 616 of the filtrate channel 612 and is discharged. However, all filtrate originating from the washing zone T2 does not leave the filtrate channel 612, but a certain amount remains.

In Fig. 7, the compartments 604, 606 are positioned in the discharge zone U (see Fig. 2), and the compartments 604, 606 are positioned substantially below the associated filtrate channel 612. The compartments 604, 606 are passing the first stationary covering means 702, 704 and are thus covered, whereby the pulp 622, 624 is retained in the compartments 604, 606 and does not run the risk of leaving the compartments 604, 606, the openings of which open downwardly. Thereafter, by means of the nozzle 414, a gas flow is generated in the filtrate channel 612 from the fluid inlet 622 to the outlets 614, 616, and the gas flow is controlled to capture filtrate remaining in the filtrate channel 612 and to subsequently discharge gas and captured filtrate from the filtrate channel 612 via the outlets 614, 616 thereof. Hereby, the amount of filtrate remaining in the filtrate channel 612 is minimized.

In Fig. 8, the compartments 604, 606 are still positioned in the discharge zone U (see Fig. 2). After the control of the gas flow and the discharge of gas and captured filtrate, the compartments 604, 606 are uncovered by the fact that the compartments 604, 606 have passed by the covering means 702, 704, which has occurred in Fig. 8. Thereafter, the outlets 614, 616 of the filtrate channel are positioned at the stationary closure means 802, 804 and are closed by them, and then the filtrate channel 612 is pressurized by the pressurizing means 502. The increase in pressure pushes the pulp out of the compartments 604, 606 so that the pulp leaves the compartments 604, 606, which is shown in Fig. 8. Thereafter, the pulp is discharged from the apparatus via the pulp outlet 210 of the apparatus (see Fig. 2) for subsequent processing. By the innovative generation and control of the gas flow in the filtrate channel 612, the rewetting of the pulp, situated in the compartments 604, 606, by filtrate is minimized during the discharge.

The fluid inlet of each filtrate channel 612 can also open in the direction towards the central axis 601 of the drum, and then the nozzle 414 is provided inwardly of the flow channels of the drum.

Each filtrate channel 612 of the embodiment according to Figs. 6-8 can also be divided into two sub-channels separated from each other, where the sub-channels have their own fluid inlet connectable to the nozzle 414, and where one of the sub-channels has its outlet 614 at the first end of the drum, and the other sub-channel has its outlet 616 at the second end 620 of the drum.

The filtrate channel in the embodiments of the present invention can have different designs. The filtrate channel can, for example, have a sloping design where the cross-section area of the filtrate channel is greatest at the outlet of the filtrate channel and smallest at the fluid inlet of the filtrate channel. Hereby, the total volume of the filtrate channel is reduced, whereby the amount of filtrate which can remain in the filtrate channel is reduced. The result of this is a more efficient discharge of filtrate from the filtrate channel since the volume of the filtrate to be discharged is smaller. Other configurations of the filtrate channel, which contribute to a reduction of the volume of the filtrate channel, or, in other ways facilitate the flow of filtrate in the filtrate channel, are possible.

## Claims

1. An apparatus for washing pulp, comprising a rotatable drum (102, 602) provided with two ends (406, 408) and with a number of outer compartments (104, 604, 606) for the pulp (418, 622, 624), which are defined by compartment walls (106) extending along the longitudinal extension of the drum (102, 602) and distributed around the circumference of the drum (102, 602), a formation zone (F) for forming the pulp (418, 622, 624) in the compartments (104, 604, 606) of the drum (102, 602), at least one washing zone (T1, T2) for washing the pulp (418, 622, 624) placed in the compartments (104, 604, 606), and a discharge zone (U) for discharging the washed pulp (418, 622, 624), which is situated in the compartments (104, 604, 606), from the compartments (104, 604, 606), which drum (102, 602) comprises a number of filtrate channels (212, 612) for transporting filtrate from the compartments (104, 604, 606), the filtrate channels (212, 612) extending along the longitudinal extension of the drum (102, 602) and being provided inwardly of the compartments (104, 604, 606), and comprises a surface (110) permeable to fluid provided between the filtrate channels (212, 612) and the compartments (104, 604, 606), via which surface (110) the filtrate from the compartments (104, 604, 606) reaches the filtrate channels (212, 612), each filtrate channel (212, 612) comprising at least one outlet (402, 614, 616) for discharging filtrate from the filtrate channel (212, 612), each filtrate channel (212, 612) having an open end at one of the ends (406, 408) of the drum (102, 602), where the open end defines said outlet (402, 614, 616) of the filtrate channel (212, 612), the apparatus further comprises at least one means (414) for generating a fluid flow through the filtrate channel (212, 612), which means (414) is connectable to at least one fluid inlet (404, 622) of the filtrate channel (212, 612) and adapted to generate the fluid flow through the filtrate channel (212, 612) from the fluid inlet (404, 622) of the filtrate channel (212, 612) to the outlet (402, 614, 616) thereof, and the apparatus comprises at least one means (414) for controlling the fluid flow to capture filtrate remaining in the filtrate channel (212, 612) and for discharging fluid with the captured filtrate from the filtrate channel (212, 612) via the outlet (402, 614, 616) thereof, where the filtrate channel (212, 612) extends along the longitudinal extension of the drum (102, 602) between said fluid inlet (404, 622) and said outlet (402, 614, 616).

2. An apparatus according to claim 1, **characterized in that** the each filtrate channel (212, 612) has an open end at one end (406) of the drum (102, 602) and an open end at the other end (408) of the drum (102, 602), and **in that** at least one of the open ends defines said outlet (402, 614, 616) of the filtrate channel (212, 612).

3. An apparatus according to claim 1 or 2, **characterized in that** the drum (102) has a first end (406) and a second end (408), **in that** the discharge outlet (402) of the filtrate channels (212) is provided at the first end (406), and **in that** the fluid inlet (404) of the filtrate channel (212) is provided at the second end (408), or vice versa.

4. An apparatus according to claim 1 or 2, **characterized in that** the drum (602) has a first end (618) and a second end (620), **in that** the filtrate channel (612) comprises at least two discharge outlets (614, 616), where the first outlet (614) is provided at the first end (618), and the second outlet (616) is provided at the second end (620), and **in that** the fluid inlet (622) of the filtrate channel (612) is provided between the first and second ends (618, 620).

5. An apparatus according to any of the claim 1 to 4, **characterized in that** the apparatus comprises a covering means (501, 702, 704) for retaining the pulp (418, 622, 624) in the compartment (104, 604, 606), and **in that** the means (414) for controlling the fluid flow is adapted to guide the fluid flow in the filtrate channel (212, 612) when the associated compartment (104, 604, 606) is covered by the covering means (501, 702, 704).

6. An apparatus according to any of the claims 1 to 5, **characterized in that**, after the washing of the pulp (418, 622, 624) in the at least one washing zone (T1, T2), which pulp is placed in the compartment (104, 604, 606), and before the discharge of the washed pulp (418, 622, 624) in the discharge zone (U), the means (414) for controlling the fluid flow is adapted to guide the fluid flow in the filtrate channel (212, 612) associated with said compartment (104, 604, 606).

7. An apparatus according to claim 6, **characterized in that** the apparatus comprises a pressurizing means (502) for pressurizing the filtrate channel (212, 612), which pressurizing means (502) is connectable to the fluid inlet (404, 622) of the filtrate channel (212, 612), **in that** the apparatus is adapted to control the pressurizing means (502) to increase the pressure in the filtrate channel (212, 612) when the associated compartment (104, 604, 606) is positioned in the discharge zone (U), whereby the increase in pressure pushes the pulp (418, 622, 624) out of the compartment (104, 604, 606), and **in that** the means (414) for controlling the fluid flow is adapted to guide the fluid flow in the filtrate channel (212, 612) before the apparatus increases the pressure in the same.

8. An apparatus according to claim 7, **characterized in that** the outlet (402, 614, 616) of the filtrate channel (212, 612) is provided with a closure means (504, 802, 804) for closing the outlet (402, 614, 616) at said pressurizing.

9. An apparatus according to claim 7 or 8, **characterized in that** the means (414) for generating a fluid flow and the pressurizing means (502) are connectable to one and the same fluid inlet (404, 622) of the filtrate channel (212, 612).

10. An apparatus according to any of the claims 1 to 9, **characterized in that** the apparatus comprises at least two consecutive washing zones (T1, T2) which the compartments (104, 604, 606) pass during the rotation of the drum (102, 602), and **in that** the means (414) for controlling the fluid flow is adapted to guide the fluid flow in the filtrate channel (212, 612) after the washing of the pulp (418, 622, 624), which is situated in the associated compartment (104, 604, 606), in the first washing zone (T1, T2) and before the washing in the second washing zone (T1, T2).

11. An apparatus according to any of the claims 1 to 10, **characterized in that** the means (414) for generating a fluid flow and the means (414) for controlling the fluid flow are adapted to generate and control, respectively, a fluid flow in the form of a gas flow.

12. An apparatus according to any of the claims 1 to 10, **characterized in that** the means (414) for generating a fluid flow and the means (414) for controlling the fluid flow are adapted to generate and control, respectively, a fluid flow in the form of a liquid flow.

13. A method for washing pulp in a washing apparatus comprising a rotatable drum (102, 602) provided with two ends (406, 408) and with a number of outer compartments (104, 604, 606) for the pulp (418, 622, 624), which are defined by compartment walls (106) extending along the longitudinal extension of the drum (102, 602) and distributed around the circumference of the drum (102, 602), where the pulp (418, 622, 624) is formed in the compartments (104, 604, 606) of the drum (102, 602) in a formation zone (F), where the pulp (418, 622, 624) placed in the compartments (104, 604, 606) is washed in at least one washing zone (T1, T2), and where the washed pulp (418, 622, 624) situated in the compartments (104, 604, 606) is discharged from the compartments (104, 604, 606) in a discharge zone (U), which drum (102, 602) comprises a number of filtrate channels (212, 612) for transporting filtrate from the compartments (104, 604, 606), the filtrate channels (212, 612) extending along the longitudinal extension of the drum (102, 602) and being provided inwardly of the compartments (104, 604, 606), and comprises a surface (110) permeable to fluid provided between the filtrate channels (212, 612) and the compartments (104, 604, 606), via which surface (110) the filtrate from the compartments (104, 604, 606) reaches the filtrate channels (212, 612), each filtrate channel (212, 612) comprising at least one outlet (402, 614, 616) for discharging filtrate from the filtrate channel (212, 612), which method comprises the following steps:
■ providing each filtrate channel (212, 612) with an open end at one of the ends (406, 408) of the drum (102, 602), where the open end defines said outlet (402, 614, 616) of the filtrate channel (212, 612),
■ generating a fluid flow through the filtrate channel (212, 612) from at least one fluid inlet (404, 622) of the filtrate channel (212, 612) to said outlet (402, 614, 616), and
■ controlling the fluid flow to capture filtrate remaining in the filtrate channel (212, 612) and to discharge fluid with the captured filtrate from the filtrate channel (212, 612) via the outlet (402, 614, 616) thereof, where the filtrate channel (212, 612) extends along the longitudinal extension of the drum (102, 602) between said fluid inlet (404, 622) and said outlet (402, 614, 616).

14. A method according to claim 13, **characterized in that** the each filtrate channel (212, 612) is provided with an open end at one end (406) of the drum (102, 602) and an open end at the other end (408) of the drum (102, 602), and **in that** at least one of the open ends defines said outlet (402, 614, 616) of the filtrate channel (212, 612).

15. A method according to claims 13 or 14, **characterized in that** during the control of the fluid flow in the filtrate channel (212, 612), the pulp (418, 622, 624) is retained in the associated compartment (104, 604, 606) by covering the compartment (104, 604, 606) by means of a covering means (501, 702, 704).

## Patentansprüche

1. Vorrichtung zum Waschen von Pulpe, umfassend eine rotierbare Trommel (102, 602), ausgestattet mit zwei Enden (406, 408) und mit einer Anzahl an äußeren Kammern (104, 604, 606) für die Pulpe (418, 622, 624), die durch Kammerwände (106) definiert sind, die sich entlang der Längsausdehnung der Trommel (102, 602) erstrecken und rund um den Umfang der Trommel (102, 602) verteilt sind, eine Formationszone (F) zur Bildung der Pulpe (418, 622, 624) in den Kammern (104, 604, 606) der Trommel (102, 602), zumindest eine Waschzone (T1, T2) zum Waschen der in den Kammern (104, 604, 606) befindlichen Pulpe (418, 622, 624) und eine Austragszone (U) zum Austragen der gewaschenen Pulpe (418, 622, 624), welche sich in den Kammern (104, 604, 606) befindet, aus den Kammern (104, 604, 606), welche Trommel (102, 602) eine Anzahl von Filtratkanälen (212, 612) zum Transport des Filtrats aus den Kammern (104, 604, 606) umfasst, wobei sich die Filtratkanäle (212, 612) entlang der Längsausdehnung der Trommel (102, 602) erstrecken und im Inneren der Kammern (104, 604, 606) vorgesehen sind, und eine fluiddurchlässige Fläche (110) umfasst, die zwischen den Filtratkanälen (212, 612) und den Kammern (104, 604, 606) vorgesehen ist, über welche Fläche (110) das Filtrat aus den Kammern (104, 604, 606) die Filtratkanäle (212, 612) erreicht, von welchem jeder Filtratkanal (212, 612) zumindest einen Auslass (402, 614, 616) zum Austragen des Filtrats aus dem Filtratkanal (212, 612) umfasst, und jeder Filtratkanal (212, 612) ein offenes Ende an einem der Enden (406, 408) der Trommel (102, 602) hat, wobei das offene Ende besagten Auslass (402, 614, 616) des Filtratkanals (212, 612) definiert, und die Vorrichtung umfasst weiters zumindest ein Mittel (414) zur Erzeugung eines Fluidstroms durch den Filtratkanal (212, 612), welches Mittel (414) mit zumindest einem Fluideinlass (404, 622) des Filtratkanals (212, 612) verbindbar ist und zur Erzeugung des Fluidstroms durch den Filtratkanal (212, 612) vom Fluideinlass (404, 622) des Filtratkanals (212, 612) zum Auslass (402, 614, 616) davon geeignet ist, und die Vorrichtung zumindest ein Mittel (414) zur Steuerung des Fluidstroms zum Erfassen des restlichen Filtrats im Filtratkanal (212, 612) und zum Ableiten von Fluid mit dem eingefangenen Filtrat aus dem Filtratkanal (212, 612) über den Auslass (402, 614, 616) davon, umfasst, wobei sich der Filtratkanal (212, 612) entlang der Längsausdehnung der Trommel (102, 602) zwischen besagtem Fluideinlass (404, 622) und besagtem Auslass (402, 614, 616) erstreckt.

2. Vorrichtung nach Anspruch 1, **dadurch gekennzeichnet, dass** jeder Filtratkanal (212, 612) ein offenes Ende an einem Ende (406) der Trommel (102, 602) und ein offenes Ende an dem anderen Ende (408) der Trommel (102, 602) hat, und dass zumindest eines der offenen Enden besagten Auslass (402, 614, 616) des Filtratkanals (212, 612) definiert.

3. Vorrichtung nach Anspruch 1 oder 2, **dadurch gekennzeichnet, dass** die Trommel (102) ein erstes Ende (406) und ein zweites Ende (408) hat, dass der Abflussauslass (402) des Filtratkanals (212) am ersten Ende (406) angeordnet ist, und dass der Fluideinlass (404) des Filtratkanals (212) am zweiten Ende (408) vorgesehen ist, oder umgekehrt.

4. Vorrichtung nach Anspruch 1 oder 2, **dadurch gekennzeichnet, dass** die Trommel (602) ein erstes Ende (618) und ein zweites Ende (620) hat, dass der Filtratkanal (612) zumindest zwei Abflussauslässe (614, 616) umfasst, wobei der erste Auslass (614) am ersten Ende (618) vorgesehen und der zweite Auslass (616) am zweiten Ende (620) vorgesehen ist, und dass der Fluideinlass (622) des Filtratkanals (612) zwischen dem ersten und dem zweiten Ende (618, 620) vorgesehen ist.

5. Vorrichtung nach einem der Ansprüche 1 bis 4, **dadurch gekennzeichnet, dass** die Vorrichtung ein Abdeckmittel (501, 702, 704) zum Zurückhalten der Pulpe (418, 622, 624) in der Kammer (104, 604, 606) umfasst, und dass das Mittel (414) zur Steuerung des Fluidstroms zur Führung des Fluidstroms im Filtratkanal (212, 612) geeignet ist, wenn die zugehörige Kammer (104, 604, 606) durch das Abdeckmittel (501, 702, 704) abgedeckt ist.

6. Vorrichtung nach einem der Ansprüche 1 bis 5, **dadurch gekennzeichnet, dass**, nach dem Waschen der Pulpe (418, 622, 624) in der zumindest einen Waschzone (T1, T2), welche Pulpe sich in der Kammer (104, 604, 606) befindet, und vor dem Abfließen der gewaschenen Pulpe (418, 622, 624) in die Austragszone (U), das Mittel (414) zur Steuerung des Fluidstroms, zur Führung des Fluidstroms im Filtratkanal (212, 612), der mit besagter Kammer (104, 604, 606) in Verbindung steht, geeignet ist.

7. Vorrichtung nach Anspruch 6, **dadurch gekennzeichnet, dass** die Vorrichtung ein Druckmittel (502) zur Druckbeaufschlagung des Filtratkanals (212, 612) umfasst, welches Druckmittel (502) mit dem Fluideinlass (404, 622) des Filtratkanals (212, 612) verbindbar ist, dass die Vorrichtung zur Steuerung des Druckmittels (502) zur Steigerung des Drucks im Filtratkanal (212, 612) geeignet ist, wenn die zugehörige Kammer (104, 604, 606) in der Austragszone (U) positioniert ist, wobei die Drucksteigerung die Pulpe (418, 622, 624) aus der Kammer (104, 604, 606) drückt, und dass das Mittel (414) zur Steuerung des Fluidstroms zur Führung des Fluidstroms im Filtratkanal (212, 612) geeignet ist, bevor die Vorrichtung den Druck in demselben steigert.

8. Vorrichtung nach Anspruch 7, **dadurch gekennzeichnet, dass** der Auslass (402, 614, 616) des Filtratkanals (212, 612) mit einem Verschlussmittel (504, 802, 804) zum Verschließen des Auslass (402, 614, 616) bei besagter Druckbeaufschlagung vorgesehen ist.

9. Vorrichtung nach Anspruch 7 oder 8, **dadurch gekennzeichnet, dass** das Mittel (414) zur Erzeugung eines Fluidstroms und das Druckmittel (502) mit ein und demselben Fluideinlass (404, 622) des Filtratkanals (212, 612) verbindbar sind.

10. Vorrichtung nach einem der Ansprüche 1 bis 9, **dadurch gekennzeichnet, dass** die Vorrichtung zumindest zwei aufeinanderfolgende Waschzonen (T1, T2) umfasst, welche die Kammern (104, 604, 606) während der Rotation der Trommel (102, 602) passieren, und dass das Mittel (414) zur Steuerung des Fluidstroms zur Führung des Fluidstroms im Filtratkanal (212, 612) nach dem Waschen der Pulpe (418, 622, 624), welche sich in der zugehörigen Kammer (104, 604, 606) in der ersten Waschzone (T1, T2) und vor dem Waschen in der zweiten Waschzone (T1, T2) befindet, geeignet ist.

11. Vorrichtung nach einem der Ansprüche 1 bis 10, **dadurch gekennzeichnet, dass** das Mittel (414) zur Erzeugung eines Fluidstroms und das Mittel (414) zur Steuerung des Fluidstroms zur Erzeugung bzw. Steuerung eines Fluidstroms in Form eines Gasstroms, geeignet sind.

12. Vorrichtung nach einem der Ansprüche 1 bis 10, **dadurch gekennzeichnet, dass** das Mittel (414) zur Erzeugung eines Fluidstroms und das Mittel (414) zur Steuerung des Fluidstroms, zur Erzeugung bzw. Steuerung eines Fluidstroms in Form eines Flüssigkeitsstroms, geeignet sind.

13. Verfahren zum Waschen von Pulpe in einer Waschvorrichtung, umfassend eine rotierbare Trommel (102, 602), ausgestattet mit zwei Enden (406, 408) und mit einer Anzahl an äußeren Kammern (104, 604, 606) für die Pulpe (418, 622, 624), die durch Kammerwände (106) definiert sind, die sich entlang der Längsausdehnung der Trommel (102, 602) erstrecken und rund um den Umfang der Trommel (102, 602) verteilt sind, wobei die Pulpe (418, 622, 624) in den Kammern (104, 604, 606) der Trommel (102, 602) in einer Formationszone (F) gebildet wird, wobei die in den Kammern (104, 604, 606) befindliche Pulpe (418, 622, 624) in zumindest einer Waschzone (T1, T2) gewaschen wird und wobei die in den Kammern (104, 604, 606) befindliche gewaschene Pulpe (418, 622, 624) aus den Kammern (104, 604, 606) in eine Austragszone (U) geleitet wird, welche Trommel (102, 602) eine Anzahl an Filtratkanälen (212, 612) zum Transport des Filtrats aus den Kammern (104, 604, 606) umfasst, wobei die Filtratkanäle (212, 612), die sich entlang der Längsausdehnung der Trommel (102, 602) erstrecken und im Inneren der Kammern (104, 604, 606) vorgesehen sind, und eine fluiddurchlässige Fläche (110) zwischen den Filtratkanälen (212, 612) und den Kammern (104, 604, 606) umfasst, über welche Fläche (110) das Filtrat aus den Kammern (104, 604, 606) die Filtratkanäle (212, 612) erreicht, von welchen jeder Filtratkanal (212, 612) zumindest einen Auslass (402, 614, 616) zum Ableiten des Filtrats aus dem Filtratkanal (212, 612) umfasst, wobei das Verfahren folgende Schritte umfasst:
■ Ausstattung jedes Filtratkanals (212, 612) mit einem offenen Ende an einem der Enden (406, 408) der Trommel (102, 602), wobei das offene Ende besagten Auslass (402, 614, 616) des Filtratkanals (212, 612) definiert,
■ Erzeugung eines Fluidstroms durch den Filtratkanal (212, 612) von zumindest einem Fluideinlass (404, 622) des Filtratkanals (212, 612) zu besagtem Auslass (402, 614, 616), und
■ Steuerung des Fluidstroms zum Erfassen des im Filtratkanal (212, 612) verbliebenen Filtrats und zum Abführen des Fluids mit dem erfassten Filtrat aus dem Filtratkanal (212, 612) über den Auslass (402, 614, 616) davon, wobei der Filtratkanal (212, 612) sich entlang der Längsausdehnung der Trommel (102, 602) zwischen besagtem Fluideinlass (404, 622) und besagtem Auslass (402, 614, 616) erstreckt.

14. Verfahren nach Anspruch 13, **dadurch gekennzeichnet, dass** jeder Filtratkanal (212, 612) mit einem offenen Ende an einem Ende (406) der Trommel (102, 602) und einem offenen Ende am anderen Ende (408) der Trommel (102, 602) ausgestattet ist, und dass zumindest eines der offenen Enden besagten Auslass (402, 614, 616) des Filtratkanals (212, 612) definiert.

15. Verfahren nach Anspruch 13 oder 14, **dadurch gekennzeichnet, dass** während der Steuerung des Fluidstroms im Filtratkanal (212, 612) die Pulpe (418, 622, 624) in der zugehörigen Kammer (104, 604, 606) durch Abdecken der Kammer (104, 604, 606) mittels eines Abdeckmittels (501, 702, 704) zurückbehalten wird.

## Revendications

1. Appareil de blanchiment de pâte, comprenant un tambour rotatif (102, 602) pourvu de deux extrémités (406, 408) et d'un certain nombre de compartiments externes (104, 604, 606) pour la pâte (418, 622, 624), qui sont définis par des parois de compartiment (106) s'étendant dans le sens longitudinal du tambour (102, 602) et répartis sur la circonférence du tambour (102, 602), une zone de formation (F) pour former la pâte (418, 622, 624) dans les compartiments (104, 604, 606) du tambour (102, 602), au moins une zone de blanchiment (T1, T2) pour blanchir la pâte (418, 622, 624) placée dans les compartiments (104, 604, 606), et une zone d'évacuation (U) pour évacuer, des compartiments (104, 604, 606), la pâte blanchie (418, 622, 624) qui se trouve dans les compartiments (104, 604, 606), lequel tambour (102, 602) comprend un certain nombre de canaux de filtrat (212, 612) pour transporter un filtrat sortant des compartiments (104, 604, 606), les canaux de filtrat (212, 612) s'étendant dans le sens longitudinal du tambour (102, 602) et étant ménagés à l'intérieur des compartiments (104, 604, 606), et comprend une surface (110), perméable aux fluides, ménagée entre les canaux de filtrat (212, 612) et les compartiments (104, 604, 606), surface (110) par l'intermédiaire de laquelle le filtrat sortant des compartiments (104, 604, 606) atteint les canaux de filtrat (212, 612), chaque canal de filtrat (212, 612) comprenant au moins une sortie (402, 614, 616) pour évacuer le filtrat du canal de filtrat (212, 612), chaque canal de filtrat (212, 612) présentant une extrémité ouverte à l'une des extrémités (406, 408) du tambour (102, 602), dans lequel l'extrémité ouverte définit ladite sortie (402, 614, 616) du canal de filtrat (212, 612), l'appareil comprend en outre au moins un moyen (414) pour créer un écoulement de fluide dans le canal de filtrat (212, 612), lequel moyen (414) peut être relié à au moins une entrée de fluide (404, 622) du canal de filtrat (212, 612) et est conçu pour créer l'écoulement de fluide dans le canal de filtrat (212, 612) depuis la sortie de fluide (404, 622) du canal de filtrat (212, 612) vers la sortie (402, 614, 616) de celui-ci, et l'appareil comprend au moins un moyen (414) pour réguler l'écoulement de fluide afin de capturer le filtrat restant dans le canal de filtrat (212, 612) et d'évacuer le fluide, avec le filtrat capturé, du canal de filtrat (212, 612) par la sortie (402, 614, 616) de celui-ci, dans lequel le canal de filtrat (212, 612) s'étend dans le sens longitudinal du tambour (102, 602) entre ladite entrée de fluide (404, 622) et ladite sortie (402, 614, 616).

2. Appareil selon la revendication 1, **caractérisé en ce que** chaque canal de filtrat (212, 612) présente une extrémité ouverte à une extrémité (406) du tambour (102, 602) et une extrémité ouverte à l'autre extrémité (408) du tambour (102, 602), et **en ce qu'**au moins une des extrémités ouvertes définit ladite sortie (402, 614, 616) du canal de filtrat (212, 612).

3. Appareil selon la revendication 1 ou 2, **caractérisé en ce que** le tambour (102) présente une première extrémité (406) et une deuxième extrémité (408), **en ce que** la sortie d'évacuation (402) du canal de filtrat (212) est ménagée au niveau de la première extrémité (406), et **en ce que** l'entrée de fluide (404) du canal de filtrat (212) est ménagée au niveau de la deuxième extrémité (408), ou *vice versa.*

4. Appareil selon la revendication 1 ou 2, **caractérisé en ce que** le tambour (602) présente une première extrémité (618) et une deuxième extrémité (620), **en ce que** le canal de filtrat (612) comprend au moins deux sorties d'évacuation (614, 616), dans lequel la première sortie (614) est ménagée au niveau de la première extrémité (618) et la deuxième sortie (616) est ménagée au niveau de la deuxième extrémité (620), et **en ce que** l'entrée de fluide (622) du canal de filtrat (612) est ménagée entre les première et deuxième extrémités (618, 620).

5. Appareil selon l'une quelconque des revendications 1 à 4, **caractérisé en ce que** l'appareil comprend un moyen de recouvrement (501, 702, 704) pour retenir la pâte (418, 622, 624) dans le compartiment (104, 604, 606), et **en ce que** le moyen (414) pour réguler l'écoulement de fluide est conçu pour guider l'écoulement de fluide dans le canal de filtrat (212, 612) lorsque le compartiment (104, 604, 606) associé est couvert par le moyen de recouvrement (501, 702, 704).

6. Appareil selon l'une quelconque des revendications 1 à 5, **caractérisé en ce que**, après le blanchiment de la pâte (418, 622, 624) dans la au moins une zone de blanchiment (T1, T2), laquelle pâte est placée dans le compartiment (104, 604, 606), et avant l'évacuation de la pâte blanchie (418, 622, 624) dans la zone d'évacuation (U), le moyen (414) pour réguler l'écoulement de fluide est conçu pour guider l'écoulement de fluide dans le canal de filtrat (212, 612) associé audit compartiment (104, 604, 606).

7. Appareil selon la revendication 6, **caractérisé en ce que** l'appareil comprend un moyen de pressurisation (502) pour pressuriser le canal de filtrat (212, 612), lequel moyen de pressurisation (502) peut être relié à l'entrée de fluide (404, 622) du canal de filtrat (212, 612), **en ce que** l'appareil est conçu pour commander le moyen de pressurisation (502) afin d'augmenter la pression dans le canal de filtrat (212, 612) lorsque le compartiment (104, 604, 606) associé est positionné dans la zone d'évacuation (U), de sorte que l'augmentation de pression expulse la pâte (418, 622, 624) du compartiment (104, 604, 606), et **en ce que** le moyen (414) pour réguler l'écoulement de fluide est conçu pour guider l'écoulement de fluide dans le canal de filtrat (212, 612) avant que l'appareil n'augmente la pression dans ce dernier.

8. Appareil selon la revendication 7, **caractérisé en ce que** la sortie (402, 614, 616) du canal de filtrat (212, 612) est pourvue d'un moyen de fermeture (504, 802, 804) pour fermer la sortie (402, 614, 616) lors de ladite pressurisation.

9. Appareil selon la revendication 7 ou 8, **caractérisé en ce que** le moyen (414) pour créer un écoulement de fluide et le moyen de pressurisation (502) peuvent être reliés à une seule et même entrée de fluide (404, 622) du canal de filtrat (212, 612).

10. Appareil selon l'une quelconque des revendications 1 à 9, **caractérisé en ce que** l'appareil comprend au moins deux zones de blanchiment (T1, T2) consécutives par lesquelles les compartiments (104, 604, 606) passent pendant la rotation du tambour (102, 602), et **en ce que** le moyen (414) pour réguler l'écoulement de fluide est conçu pour guider l'écoulement de fluide dans le canal de filtrat (212, 612) après le blanchiment de la pâte (418, 622, 624), qui se trouve dans le compartiment (104, 604, 606) associé, dans la première zone de blanchiment (T1, T2) et avant le blanchiment dans la deuxième zone de blanchiment (T1, T2).

11. Appareil selon l'une quelconque des revendications 1 à 10, **caractérisé en ce que** le moyen (414) pour créer un écoulement de fluide et le moyen (414) pour réguler l'écoulement de fluide sont conçus pour créer et réguler, respectivement, un écoulement de fluide sous la forme d'un écoulement de gaz.

12. Appareil selon l'une quelconque des revendications 1 à 10, **caractérisé en ce que** le moyen (414) pour créer un écoulement de fluide et le moyen (414) pour réguler l'écoulement de fluide sont conçus pour créer et réguler, respectivement, un écoulement de fluide sous la forme d'un écoulement de liquide.

13. Procédé de blanchiment de pâte dans un appareil de blanchiment comprenant un tambour rotatif (102, 602) pourvu de deux extrémités (406, 408) et d'un certain nombre de compartiments externes (104, 604, 606) pour la pâte (418, 622, 624), qui sont définis par des parois de compartiment (106) s'étendant dans le sens longitudinal du tambour (102, 602) et répartis sur la circonférence du tambour (102, 602), dans lequel la pâte (418, 622, 624) est formée dans les compartiments (104, 604, 606) du tambour (102, 602) dans une zone de formation (F), dans lequel la pâte (418, 622, 624), placée dans les compartiments (104, 604, 606), est blanchie dans au moins une zone de blanchiment (T1, T2), et dans lequel la pâte blanchie (418, 622, 624), située dans les compartiments (104, 604, 606), est évacuée des compartiments (104, 604, 606) dans une zone d'évacuation (U), lequel tambour (102, 602) comprend un certain nombre de canaux de filtrat (212, 612) pour transporter un filtrat sortant des compartiments (104, 604, 606), les canaux de filtrat (212, 612) s'étendant dans le sens longitudinal du tambour (102, 602) et étant ménagés à l'intérieur des compartiments (104, 604, 606), et comprend une surface (110), perméable aux fluides, ménagée entre les canaux de filtrat (212, 612) et les compartiments (104, 604, 606), surface (110) par l'intermédiaire de laquelle le filtrat sortant des compartiments (104, 604, 606) atteint les canaux de filtrat (212, 612), chaque canal de filtrat (212, 612) comprenant au moins une sortie (402, 614, 616) pour évacuer le filtrat du canal de filtrat (212, 612), lequel procédé comprend les étapes suivantes :
- munir chaque canal de filtrat (212, 612) d'une extrémité ouverte à une des extrémités (406, 408) du tambour (102, 602), dans lequel l'extrémité ouverte définit ladite sortie (402, 614, 616) du canal de filtrat (212, 612),
- créer un écoulement de fluide dans le canal de filtrat (212, 612) depuis au moins une entrée de fluide (404, 622) du canal de filtrat (212, 612) vers ladite sortie (402, 614, 616), et
- réguler l'écoulement de fluide afin de capturer le filtrat restant dans le canal de filtrat (212, 612) et d'évacuer le fluide, avec le filtrat capturé, du canal de filtrat (212, 612) par la sortie (402, 614, 616) de celui-ci, dans lequel le canal de filtrat (212, 612) s'étend dans le sens longitudinal du tambour (102, 602) entre ladite entrée de fluide (404, 622) et ladite sortie (402, 614, 616).

14. Procédé selon la revendication 13, **caractérisé en ce que** chaque canal de filtrat (212, 612) est pourvu d'une extrémité ouverte à une extrémité (406) du tambour (102, 602) et d'une extrémité ouverte à l'autre extrémité (408) du tambour (102, 602), et **en ce qu'**au moins une des extrémités ouvertes définit ladite sortie (402, 614, 616) du canal de filtrat (212, 612).

15. Procédé selon la revendication 13 ou 14, **caractérisé en ce que**, pendant la régulation de l'écoulement de fluide dans le canal de filtrat (212, 612), la pâte (418, 622, 624) est retenue dans le compartiment (104, 604, 606) associé, par recouvrement du compartiment (104, 604, 606) avec un moyen de recouvrement (501, 702, 704).
